# EUROPEAN PATENT SPECIFICATION

(11) **EP 3 389 071 B1**
(45) Date of publication and mention of the grant of the patent: **06.11.2019**
(21) Application number: 17166688.6
(22) Date of filing: 14.04.2017
(51) Int. Cl.: H01H 35/14, G01D 11/30, B60R 19/48

(54) **VEHICLE MOUNTED CRASH IMPACT ATTENUATOR**
FAHRZEUG GEBUNDENER AUFPRALLDÄMPFER
AMORTISSEUR D'IMPACT MONTE SUR VEHICULE

(43) Date of publication of application: 17.10.2018
(73) Proprietor: Aptiv Technologies Limited, St. Michael (BB)
(72) Inventor: KOULAS, Theodoros, 50259 Pulheim (DE)
(74) Representative: Manitz Finsterwald Patent- und Rechtsanwaltspartnerschaft mbB

(56) References cited:
- DE-A1-102004 037 257
- DE-A1-102015 209 904
- US-A- 5 192 838

## Description

### TECHNICAL FIELD

The present invention relates to sensor support assembly adapted to be arranged in front of a vehicle and to collapse when occurs a low speed - up to 20km/h - frontal crash.

### BACKGROUND OF THE INVENTION

A crash Middle Range Radar - MRR - or more generally Automotive Radar sensor fixed on a collapsible sensor support assembly is arranged, for instance in the front of a car so that, in case of a low speed crash the extent of damages at the vehicle structure will be minimized by only replacing the sensor and sensor support. It is of utmost importance that said support assembly permanently rests in a normal position and only collapses when a crash occurs and considering the automotive compliance durability standards, all manufacturing and assembling tolerances as well as environmental conditions, the support sensor must collapse linearly under a predetermined force, without bending, rotating or being stuck.

US 5 192 838 discloses a sensor support assembly according to the preamble of claim 1.

### SUMMARY OF THE INVENTION

Accordingly, it is an object of the present invention to resolve the above mentioned problems in providing a sensor support assembly comprising a frame member adapted to be fixed on a vehicle structure and a sensor support member adapted to be inserted in a hollow defined in the frame member. Said hollow defines a longitudinal axis along which the support member can switch from a normal position to a collapse position when an axial force applied on the support member exceeds a predetermined threshold. The support member is substantially outside the hollow in the normal position and substantially inside the hollow in the collapse position, the support member being guided during said displacement between side faces of the hollow and side faces of the support member.

Also, the sensor support assembly further comprises a male guiding member cooperating with a complementary female guiding member aligned along said longitudinal axis.

Also, the male guiding member is integral to the support member and, the female guiding member is defined in the frame member.

In another alternative, the male guiding member is integral to the frame member and, the female guiding member is defined in the support member.

Also, whatever the embodiment, the male guiding member has a T-like shape.

Also, the sensor support assembly comprises several a male and female guiding members cooperating with one other and arranged on different sides of the hollow and of the support member.

Also, the sensor support assembly further comprises a guiding rail arranged in a clearance defined between the support member and the side faces of the hollow. Said rail is integral to the frame member and it defines an longitudinal linear tip in contact against an opposing side face of the support member.

In another alternative, the rail is integral to the support member and it defines a longitudinal linear tip in contact against an opposing side face of the hollow.

Also, said linear tip defines a sharp edge in permanent contact with said opposing side face, said sharp edge scribing an axial line in said opposing side face when the support member moves from the normal position to said collapse position.

Also, the sensor support assembly further comprises a compliant member holding the support member in the normal position as long as said longitudinal force applied on the support member is inferior to said predetermined threshold, said compliant member breaking away and displacing under the influence of the support member moving from said normal position to said collapse position.

Also, said compliant member comprises an elastic arm extending from the frame member to a distant head in contact against a side face of the support member or, in another alternative, the elastic arm extends from the support member to a distant head in contact against an opposed side face of the hollow.

Moreover, the sensor support assembly comprises a plurality of said elastic arms arranged around the support member.

Also, the sensor support assembly further comprises a retaining member retaining the support member in said normal position and wherein,

said retaining member comprises a locking clip arranged at the end of a locking arm extending from the frame member, the clip defining a locking face engaged against a complementary locking face of the support member.

Also, said retaining member comprises a locking clip arranged at the end of a locking arm integral to the support member, the clip defining a locking face engaged against a complementary locking face of the frame member.

Moreover, the sensor support member comprises a plurality of said retaining members.

Also, in the normal position the support member axially urges the elastic arms which react by applying to the support member an axial counter force opposed to the collapse direction, the support member being kept in said normal position by said locking clip.

Also, the collapse threshold force is predetermined by said counter forces generated by the elastic arms.

The sum of the individual counter forces applied by each of the elastic arms is equal to said predetermined threshold.

Also, the sensor support assembly comprises a plurality of holding sets arranged around the hollow, each set comprising two elastic arms applying counter forces and arranged on both sides of a locking arm retaining the support member in the normal position, said three arms, being aligned.

### BRIEF DESCRIPTION OF THE DRAWINGS

The present invention is now described by way of example with reference to the accompanying drawings in which:
Figure 1 is a general view of a vehicle front wherein is arranged an Automotive Radar sensor fixed on a sensor support assembly as per the invention.
Figure 2 is the automotive radar sensor and the sensor support assembly of figure 1.
Figure 3, comprising views 3a and 3b, represent side views of the assembly of figure 2 in a normal position (3a), and in a collapse position (3b).
Figure 4 is the sensor support assembly of the preceding figures, comprising a frame member and a sensor support member.
Figures 5 and 6 present the sensor support assembly of figure 4 before assembly, figure 5 being viewed from the upper side and figure 6 being viewed from the underside.
Figures 7 to 12 are details of the support assembly.

### DESCRIPTION OF THE PREFERRED EMBODIMENTS

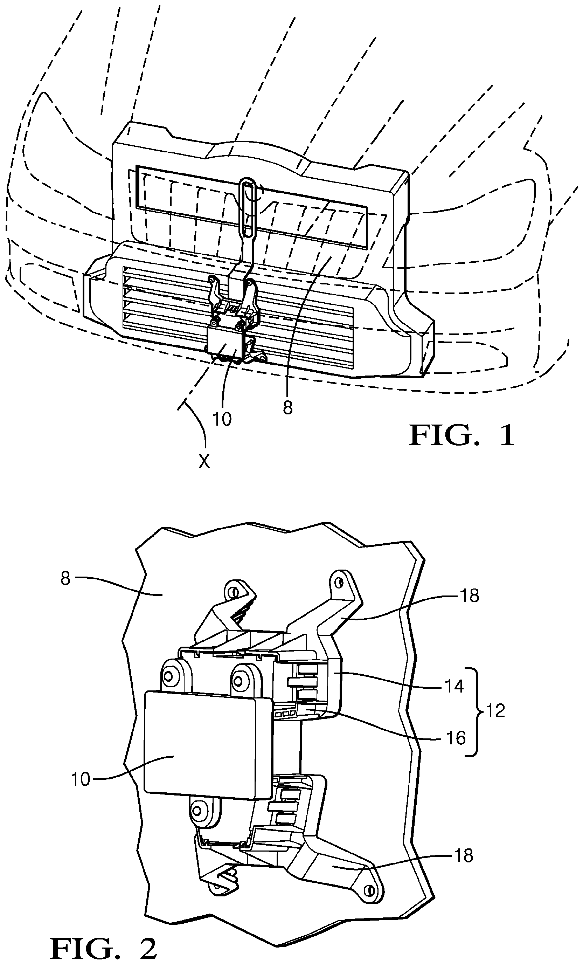

An automotive radar sensor 10 arranged on the front structure 8 of a vehicle so it is aligned along the longitudinal axis X of the vehicle senses the area before the vehicle enabling to prevent, or at least to mitigate, frontal collisions. Such an embodiment, represented on figure 1, can be replicated by arranging said sensor 10 in the rear of the car for detecting back collisions.. Figure 2 magnifies said sensor 10 arranged on a sensor support assembly 12 that comprises a frame member 14 cooperating with a support member 16. The frame member 14 is provided with holding legs 18 for fixing the assembly 12 on the structure 8 of the vehicle and, the support member 16, held in a longitudinal hollow 26 of the frame member 14, is arranged to receive the sensor 10. Said frame member 14 and support member 16 cooperate to enable the assembly 12 to collapse in case of a crash.

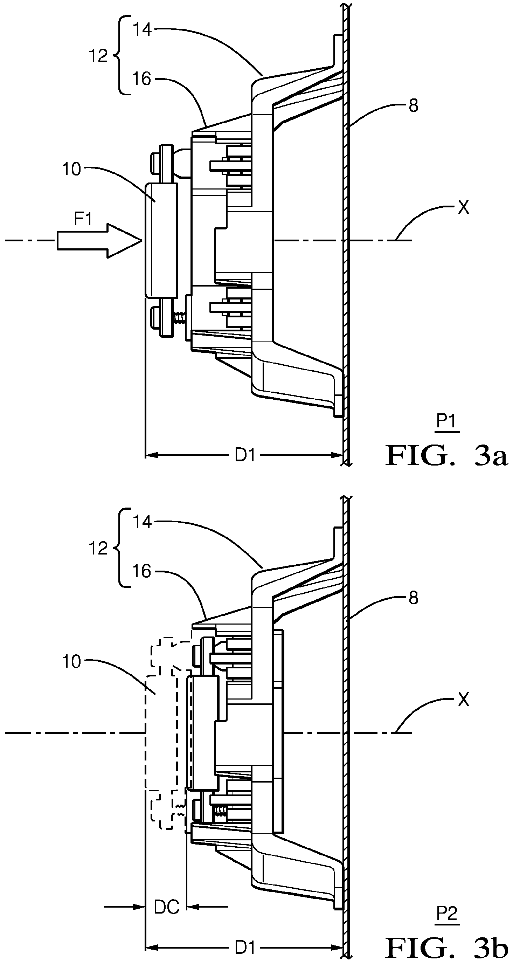

Under the influence of said frontal rearward force F1 exceeding a force threshold F0, the sensor support assembly 12 collapses from a normal position P1, or pre-crash position shown atop of figure 3 (3a), to a collapse position P2, or post-crash position represented just below (3b). In the normal position P1 the sensor 10 is at a normal distance D1 from the vehicle structure 8 and, in the collapse position P2 the sensor 10 and the support member 16 have moved in the rearward direction toward the structure 8 by a collapsed distance DC, while the frame member 14 has not moved.

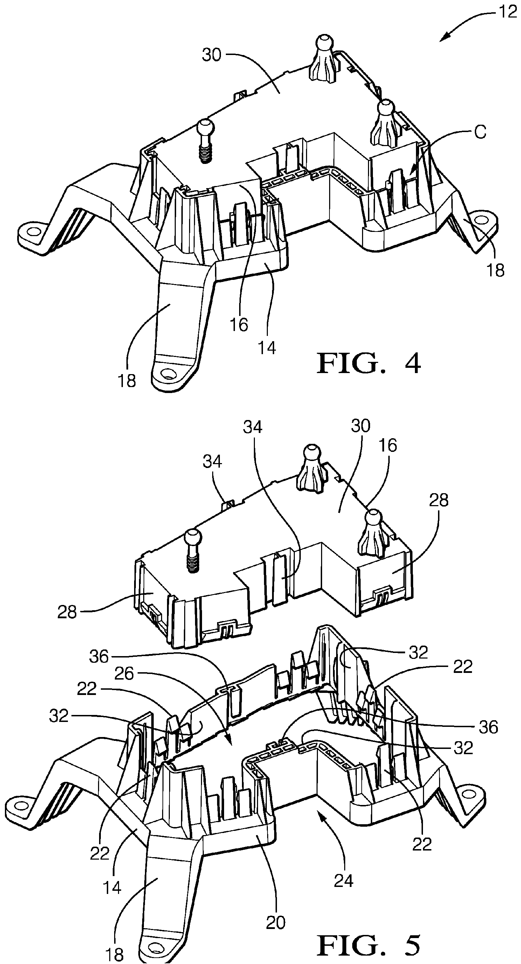

The sensor support assembly 12 is now detailed in reference to figures 4, 5 and 6 where is shown that the frame member 14 has a main frame portion 20 having four main lateral sides 22, one of which defining an inward cavity 24 adapted to receive a connector not show. Said sides 22 and cavity 24 define a polygonal shape, substantially rectangular (apart of said cavity 24) and, from the most distant corners of which extend said holding legs 18 arranged to maintain the frame portion 20 at a distance from the vehicle structure 8. Said polygonal frame portion 20 surrounds the longitudinal hollow 26 wherein is received the support member 16, said hollow 26 having a female polygonal shape complementary adjusted to the male shape of the support member 16. The support member 16 has longitudinal side faces 28 perpendicularly extending from the edges of a front face 30 adapted to receive the sensor 10. When assembled, as shown in figure 4, said side faces 28 of the support member are facing parallel opposing side faces 32 of the hollow. A peripheral clearance C is defined between said side faces 28 of the support member and the opposed side faces 32 of the hollow.

The sensor support assembly 12 further comprises means for longitudinally guiding the support member 16 within the hollow 26 of the frame member while the support member 16 translates from the normal position P1 to the collapse position P2. Said guiding means comprise male guiding members 34, having a T-like shape, the vertical leg of the "T" extending from a side face 28 of the support member while the top horizontal bar of the "T" is engaged and slidably guided in a complementary female guiding member 36 integral to a side face 32 of the hollow. In the exemplary embodiment described and shown on the figures, the assembly 12 is provided with two of said guiding member 34, 36 arranged on opposed faces. Alternative guiding means may be designed for instance by having more than two "T" arrangements or, by inverting the male and female guiding members between the side faces of the hollow and of the support member.

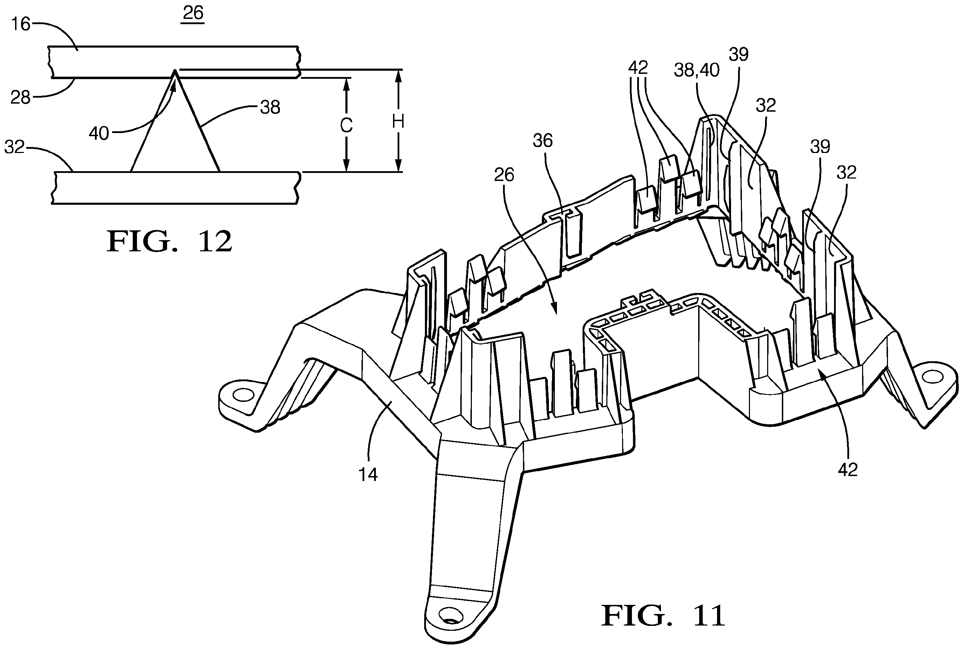

Moreover, as shown on the magnified figure 12, for longitudinally guiding the displacement of the support member 16 in the hollow 26, the assembly 12 is provided with a plurality of longitudinal rails 38 protruding from side faces 32 of the hollow. Said rails 38 have a cross-section defining a longitudinal sharp edge 40 parallel to the side face 32 and arranged at a height H from said side face 32, said height H being just slightly superior to the clearance C so that, in the assembly 12 said sharp edge 40 contacts the side face 28 of the support member and, when translating from the normal position P1 to the collapse position P2 said sharp edge 40 scribes a longitudinal line in the side face 28 of the support member. This arrangement advantageously improves the longitudinal guiding and prevents rotation of the support member and avoids rattling noise due to minor movements of the support 16 within the hollow 26. Alternatively, said rail 38 can be integral to the support member and scribe a face of the hollow.

In a further alternative, additional longitudinal rails 39 having a rib shape guidance, or rectangular section shape as shown on the figure, are added to further guide the support member 16.

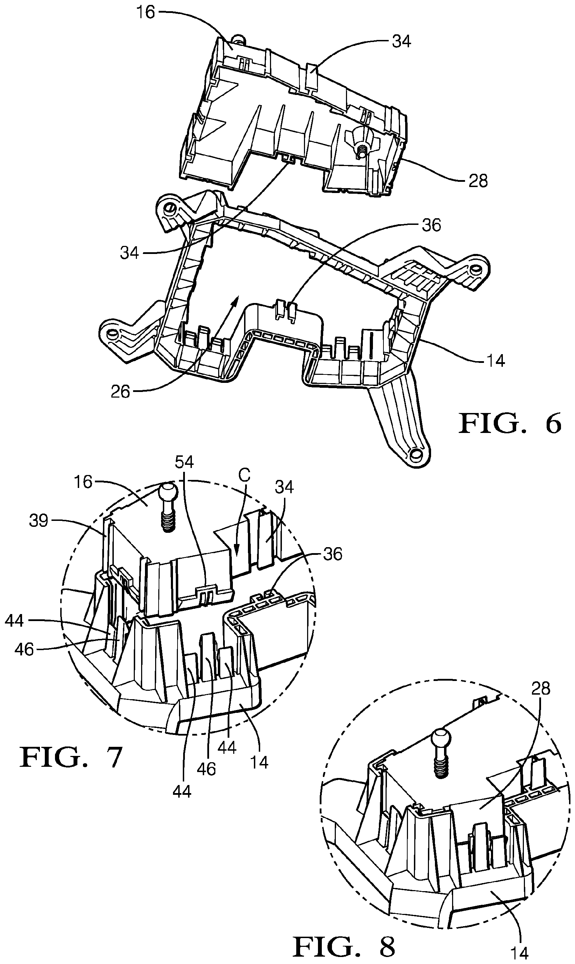

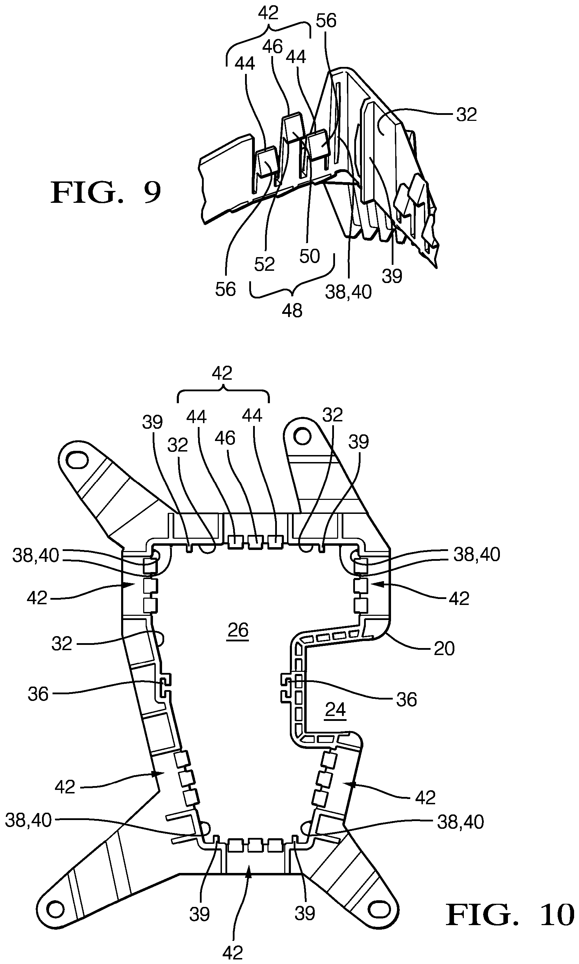

The sensor support assembly 12 further comprises a plurality of holding sets 42 shown in details on figures 7 to 11. Said sets 42 are arranged around the hollow 26 and are parallel to the side faces 32, each of the sets 42 comprising two short elastic arms 44 arranged on both sides of a compliant long locking arm 46 retaining the support member 16 in the normal position P1, said three arms 44, 46 being aligned.

More precisely, to arrange the support member 16 in its normal position P1, it is firstly presented aligned before the hollow 26 then, it is rearwardly longitudinally pushed in said hollow. During this move the side faces 28 of the support member slide against the head 48 of said long locking arms 46 that consequently outwardly bend and comply to allow passage of the support member 16. Once the support member 16 reaches said normal position P1 the locking arms 46 elastically bend back and hook, as a clip, the support member 16 in said normal position P1. Indeed, the head 48 of the locking arms 46 define slopped faces 50 against which the side faces 28 of the support member slide and apply a longitudinal force, the outwardly oriented components of which force the locking arms 46 to bend. The head 48 further defines a rearwardly oriented locking transverse face 52 provided in continuation to said slopped face 50. Complementary, the side faces 28 of the support member are provided with an integral locking member having a frontwardly oriented transverse face 54 and, when reaching said normal position P1, said locking faces 52, 54 engage with each other preventing removal of the support member 16 from the hollow 26.

Also, when approaching said normal position P1, before the complementary engagement of the locking faces 52, 54, the side faces 28 of the support member slide against slopped faces 56 arranged on the heads of the short elastic arms 44. Under said urging force, said elastic arms 44 also comply and outwardly bend -As said elastic arms 44 bend, they apply counter forces onto said side faces 28 of the support member, said counter forces having longitudinal components frontwardly urging the support member 16 to exit the hollow 26.

In the normal position P1, the support member 16 is just engaged in the hollow 26, it is transversally positioned between the sharp edges 40 of the rails, the male guiding member 34 is just partially inserted in the female guiding member 36, the short elastic arms 44 urge the support member toward a frontward exit of the hollow and, the long locking arms 46 lock the support member in position and prevent said frontward exit of the hollow.

Each of the short elastic arm 44 generates on the support member 16 a frontward longitudinal force F2 and, the sensor assembly 12 only collapses, the support member 16 translating from the normal position P1 to the collapse position P2, when the rearward longitudinal force F1 applied on the sensor 10, or on the front face 30 of the support member, exceeds the sum of the frontward longitudinal force F2, said sum defining the force threshold F0 below which the support member resists to rearward move into the hollow.

The frame member 14 and the support member 16 of the exemplary sensor support assembly 12 are both integral plastic moulded parts comprising six holding sets 42, so six locking arms 46 and twelve elastic arms 44, two facing male/female guiding members 34, 36 and four longitudinal rails 38 having sharp edges 40. Such assemblies 12 have been tested, measuring the necessary force to collapse the assembly 12 over the displacement of the support member 16.

Tests have been performed monitoring the frontal force increase, in Newton, and the insertion distance, in millimetre, of the support member into the hollow. Said tests have shown a ramp-up of the force and of the insertion quite proportional up to a threshold that, depending on design parameters was between 300N and 1000N for an insertion of 2mm to 5mm. This ramp-up was followed by a sudden drop of the force down to 0 N and a final insertion stage to 6 - 10 mm.

### LIST OF REFERENCES

- X: longitudinal axis
- F0: force threshold
- F1: force
- P1: normal - pre-crash - position
- P2: collapsed - post-crash - position
- D1: distance
- DC: collapsed distance
- C: clearance
- H: height of a rail

- 8: vehicle structure
- 10: sensor
- 12: sensor support assembly
- 14: frame member
- 16: support member
- 18: legs
- 20: frame portion
- 22: main side of the frame portion
- 24: cavity
- 26: hollow
- 28: side faces of the support member
- 30: front face of the support member
- 32: side faces of the hollow
- 34: male guiding member
- 36: female guiding member
- 38: longitudinal rail
- 39: rectangular guiding member
- 40: sharp edge
- 42: holding set
- 44: elastic arm
- 46: locking arm
- 48: head of the locking arm
- 50: slopped face of the head
- 52: locking face of the head
- 54: locking face of the support member
- 56: slopped face of the head of the short elastic arm

## Claims

1. Sensor support assembly (12) comprising a frame member (14) adapted to be fixed on a vehicle structure (8) and a sensor support member (16) adapted to be inserted in a hollow (26) defined in the frame member (14), said hollow (26) defining a longitudinal axis (X) along which the support member (16) can switch from a normal position (P1) to a collapse position (P2) when an axial force (F1) applied on the support member (16) exceeds a predetermined threshold (F0), **characterized by** the support member (16) being substantially outside the hollow (26) in the normal position (P1) and substantially inside the hollow (26) in the collapse position (P2), the support member (16) being guided during said displacement between side faces (32) of the hollow and side faces (28) of the support member.

2. Sensor support assembly (12) as claimed in the preceding claim further comprising a male guiding member (34) cooperating with a complementary female guiding member (36) aligned along said longitudinal axis (X).

3. Sensor support assembly (12) as claimed in claim 2 wherein the male guiding member (34) is integral to the support member (16) and, the female guiding member (36) is defined in the frame member (14).

4. Sensor support assembly (12) as claimed in claim 2 wherein the male guiding member (34) is integral to the frame member (16) and, the female guiding member (36) is defined in the support member (16).

5. Sensor support assembly (12) as claimed in any one of the claims 3 or 4 wherein the male guiding member (34) has a T-like shape.

6. Sensor support assembly (12) as claimed in any one of the claims 2 to 5 comprising several a male (34) and female (36) guiding members cooperating with one other and arranged on different sides of the hollow and of the support member.

7. Sensor support assembly (12) as claimed in any of the claims 2 to 6 further comprising a guiding rail (38) arranged in a clearance (C) defined between the support member (16) and the side faces (32) of the hollow, said rail (38) being integral to the frame member (14) and defining a longitudinal linear tip in contact against an opposing side face (28) of the support member.

8. Sensor support assembly (12) as claimed in any of the claims 2 to 6 further comprising a guiding rail (38) arranged in a clearance (C) defined between the support member (16) and the side faces (32) of the hollow, said rail (38) being integral to the support member (16) and defining an longitudinal linear tip in contact against an opposing side face (28) of the hollow.

9. Sensor support assembly (12) as claimed in any one of the clams 7 or 8 wherein said linear tip defines a sharp edge (40) in permanent contact with said opposing side face.

10. Sensor support assembly (12) as claimed in claim 9 wherein said sharp edge (40) scribes an axial line in said opposing side face when the support member (16) moves from the normal position (P1) to said collapse position (P2).

11. Sensor support assembly (12) as claimed in any of the preceding claims further comprising a compliant member holding the support member (16) in the normal position (P1) as long as said longitudinal force applied on the support member is inferior to said predetermined threshold (F0), said compliant member breaking away and displacing under the influence of the support member moving from said normal position to said collapse position.

12. Sensor support assembly (12) as claimed in claim 11 wherein said compliant member comprises an elastic arm (44) extending from the frame member (14) to a distant head in contact against a side face (28) of the support member.

13. Sensor support assembly (12) as claimed in claim 11 wherein said compliant member comprises an elastic arm (44) extending from the support member (16) to a distant head in contact against an opposed side face (32) of the hollow.

14. Sensor support assembly (12) as claimed in any one of the claims 12 or 13 comprising a plurality of said elastic arms (44) arranged around the support member.

15. Sensor support assembly (12) as claimed in any one of the claims 11 to 14 further comprising a retaining member retaining the support member (16) in said normal position (P1).

16. Sensor support assembly (12) as claimed in claim 15 wherein said retaining member comprises a locking clip arranged at the end of a locking arm (48) extending from the frame member (14), the clip defining a locking face (52) engaged against a complementary locking face (54) of the support member.

17. Sensor support assembly (12) as claimed in claim 15 wherein said retaining member comprises a locking clip arranged at the end of a locking arm (48) integral to the support member (16), the clip defining a locking face (52) engaged against a complementary locking face (54) of the frame member.

18. Sensor support assembly (12) as claimed in any one of the claims 16 or 17 comprising a plurality of said retaining members.

19. Sensor support assembly (12) as claimed in any one of the claims 16 to 18 wherein, in the normal position (P1) the support member (16) axially urges the elastic arms (44) which react by applying to the support member an axial counter force opposed to the collapse direction, the support member (16) being kept in said normal position (P1) by said locking clip.

20. Sensor support assembly (12) as claimed in claim 19 wherein the collapse threshold force (F0) is predetermined by said counter forces generated by the elastic arms (44).

21. Sensor support assembly (12) as claimed in the combination of claims 20 and 14 wherein the sum of the individual counter forces applied by each of the elastic arms (44) is equal to said predetermined threshold (F0).

22. Sensor support assembly (12) as claimed in the combination of the claims 21, 16, and 12 comprising a plurality of holding sets arranged around the hollow (26), each set comprising two elastic arms (44) applying counter forces and arranged on both sides of a locking arm (46) retaining the support member (16) in the normal position (P1), said three arms (44, 46) being aligned.

## Patentansprüche

1. Sensorstützanordnung (12) umfassend ein Rahmenelement (14), das zur Befestigung an einer Fahrzeugstruktur (8) angepasst ist, und ein Sensorstützelement (16), das zum Einführen in einen Hohlraum (26), der in dem Rahmenelement (14) definiert ist, angepasst ist, wobei der Hohlraum (26) eine Längsachse (X) definiert, entlang welcher das Stützelement (16) von einer Normalposition (P1) in eine eingefahrene Position (P2) übergehen kann, wenn eine auf das Stützelement (16) aufgebrachte Axialkraft (F1) einen vorbestimmten Schwellenwert (F0) überschreitet,
**dadurch gekennzeichnet, dass** sich das Stützelement (16) in der Normalposition (P1) im Wesentlichen außerhalb des Hohlraums (26) befindet und sich in der eingefahrenen Position (P2) im Wesentlichen innerhalb des Hohlraums (26) befindet, wobei das Stützelement (16) während des Verschiebens zwischen Seitenwänden (32) des Hohlraums und Seitenwänden (28) des Stützelements geführt wird.

2. Sensorstützanordnung (12) nach dem vorstehenden Anspruch, ferner umfassend ein männliches Führungselement (34), das mit einem komplementären weiblichen Führungselement (36) zusammenarbeitet, das entlang der Längsachse (X) ausgerichtet ist.

3. Sensorstützanordnung (12) nach Anspruch 2, wobei das männliche Führungselement (34) in das Stützelement (16) integriert ist und das weibliche Führungselement (36) in dem Rahmenelement (14) definiert ist.

4. Sensorstützanordnung (12) nach Anspruch 2, wobei das männliche Führungselement (34) in das Rahmenelement (16) integriert ist und das weibliche Führungselement (36) in dem Stützelement (16) definiert ist.

5. Sensorstützanordnung (12) nach einem der Ansprüche 3 oder 4, wobei das männliche Führungselement (34) eine T-förmige Gestalt aufweist.

6. Sensorstützanordnung (12) nach einem der Ansprüche 2 bis 5, die mehrere männliche (34) und weibliche (36) Führungselemente umfasst, die miteinander zusammenwirken und an verschiedenen Seiten des Hohlraums und des Stützelements angeordnet sind.

7. Sensorstützanordnung (12) nach einem der Ansprüche 2 bis 6, die ferner eine Führungsschiene (38) umfasst, die in einem Freiraum (C) angeordnet ist, der zwischen dem Stützelement (16) und den Seitenwänden (32) des Hohlraums definiert ist, wobei die Schiene (38) in das Rahmenelement (14) integriert ist und eine längliche lineare Spitze in Kontakt mit einer gegenüberliegenden Seitenwand (28) des Stützelements definiert.

8. Sensorstützanordnung (12) nach einem der Ansprüche 2 bis 6, die ferner eine Führungsschiene (38) umfasst, die in einem Freiraum (C) angeordnet ist, der zwischen dem Stützelement (16) und den Seitenwänden (32) des Hohlraums definiert ist, wobei die Schiene (38) in das Stützelement (16) integriert ist und eine längliche lineare Spitze in Kontakt mit einer gegenüberliegenden Seitenwand (28) des Hohlraums definiert.

9. Sensorstützanordnung (12) nach einem der Ansprüche 7 oder 8, wobei die lineare Spitze eine scharfe Kante (40) in permanentem Kontakt mit der gegenüberliegenden Seitenwand definiert.

10. Sensorstützanordnung (12) nach Anspruch 9, wobei die scharfe Kante (40) eine axiale Linie in die gegenüberliegende Seitenwand schreibt, wenn sich das Stützelement (16) von der Normalposition (P1) in die eingefahrene Position (P2) bewegt.

11. Sensorstützanordnung (12) nach einem der vorstehenden Ansprüche, ferner umfassend ein nachgiebiges Element, das das Stützelement (16) in der Normalposition (P1) hält, solange die auf das Stützelement aufgebrachte Längskraft niedriger als der vorbestimmte Schwellenwert (F0) ist, wobei das nachgiebige Element unter dem Einfluss dessen, dass sich das Stützelement von der Normalposition in die eingefahrene Position bewegt, wegbricht und verschoben wird.

12. Sensorstützanordnung (12) nach Anspruch 11, wobei das nachgiebige Element einen elastischen Arm (44) umfasst, der sich von dem Rahmenelement (14) aus zu einem entfernten Kopf in Kontakt mit einer Seitenwand (28) des Stützelements erstreckt.

13. Sensorstützanordnung (12) nach Anspruch 11, wobei das nachgiebige Element einen elastischen Arm (44) umfasst, der sich von dem Stützelement (16) aus zu einem entfernten Kopf in Kontakt mit einer gegenüberliegenden Seitenwand (32) des Hohlraums erstreckt.

14. Sensorstützanordnung (12) nach einem der Ansprüche 12 oder 13, die eine Vielzahl der elastischen Arme (44) umfasst, die um das Stützelement herum angeordnet sind.

15. Sensorstützanordnung (12) nach einem der Ansprüche 11 bis 14, ferner ein Rückhalteelement umfassend, das das Stützelement (16) in der Normalposition (P1) festhält.

16. Sensorstützanordnung (12) nach Anspruch 15, wobei das Rückhalteelement eine Verriegelungsklammer umfasst, die an dem Ende eines Verriegelungsarms (48) angeordnet ist, der sich von dem Rahmenelement (14) aus erstreckt, wobei die Klammer eine Verriegelungswand (52) definiert, die mit einer komplementären Verriegelungswand (54) des Stützelements in Eingriff steht.

17. Sensorstützanordnung (12) nach Anspruch 15, wobei das Rückhalteelement eine Verriegelungsklammer umfasst, die an dem Ende eines Verriegelungsarms (48) angeordnet ist, der in das Stützelement (16) integriert ist, wobei die Klammer eine Verriegelungswand (52) definiert, die mit einer komplementären Verriegelungswand (54) des Rahmenelements in Eingriff steht.

18. Sensorstützanordnung (12) nach einem der Ansprüche 16 oder 17, die eine Vielzahl der Rückhalteelemente umfasst.

19. Sensorstützanordnung (12) nach einem der Ansprüche 16 bis 18, wobei in der Normalposition (P1) das Stützelement (16) axial gegen die elastischen Arme (44) drückt, die darauf ansprechen, indem sie auf das Stützelement eine axiale Gegenkraft aufbringen, die der Einfahrrichtung entgegengesetzt ist, wobei das Stützelement (16) durch die Verriegelungsklammer in der Normalposition (P1) gehalten wird.

20. Sensorstützanordnung (12) nach Anspruch 19, wobei der Einfahrkraft-Schwellenwert (F0) durch die Gegenkräfte vorbestimmt ist, die von den elastischen Armen (44) erzeugt werden.

21. Sensorstützanordnung (12) nach der Kombination der Ansprüche 20 und 14, wobei die Summe der einzelnen Gegenkräfte, die von jedem der elastischen Arme (44) aufgebracht werden, gleich dem vorbestimmten Schwellenwert (F0) ist.

22. Sensorstützanordnung (12) nach der Kombination der Ansprüche 21, 16 und 12, umfassend eine Vielzahl von Haltesätzen, die um den Hohlraum (26) herum angeordnet sind, wobei jeder Satz zwei elastische Arme (44) umfasst, die Gegenkräfte aufbringen und an beiden Seiten eines Verriegelungsarms (46) angeordnet sind, welcher das Stützelement (16) in der Normalposition (P1) festhält, wobei die drei Arme (44, 46) ausgerichtet sind.

## Revendications

1. Ensemble formant support de capteur (12) comprenant un élément de cadre (14) adapté à être fixé sur une structure (8) d'un véhicule et un élément support de capteur (16) adapté à être introduit dans un creux (26) défini dans l'élément de cadre (14), ledit creux (26) définissant un axe longitudinal (X) le long duquel l'élément de support (16) peut commuter depuis une position normale (P1) vers une position écrasée (P2) quand une force axiale (F1) appliquée sur l'élément support (16) excède un seuil prédéterminé (F0),
**caractérisé en ce que** l'élément support (16) est sensiblement à l'extérieur du creux (26) dans la position normale (P1) et sensiblement à l'intérieur du creux (26) dans la position écrasée (P2), l'élément support (16) étant guidé pendant ledit déplacement entre des faces latérales (32) du creux et des faces latérales (28) de l'élément support.

2. Ensemble formant support de capteur (12) selon la revendication précédente, comprenant un élément de guidage mâle (34) coopérant avec un élément de guidage femelle complémentaire (36) aligné le long dudit axe longitudinal (X).

3. Ensemble formant support de capteur (12) selon la revendication 2, dans lequel l'élément de guidage mâle (34) est formé de manière intégrale avec l'élément de support (16), et l'élément de guidage femelle (36) est défini dans l'élément de cadre (14).

4. Ensemble formant support de capteur (12) selon la revendication 2, dans lequel l'élément de guidage mâle (34) est formé de manière intégrale avec l'élément de cadre (14), et l'élément de guidage femelle (36) est défini dans l'élément support (16).

5. Ensemble formant support de capteur (12) selon l'une quelconque des revendications 3 ou 4, dans lequel l'élément de guidage mâle (34) a une forme semblable à un T.

6. Ensemble formant support de capteur (12) selon l'une quelconque des revendications 2 à 5, comprenant plusieurs éléments de guidage mâles (34) et femelles (36) coopérant les uns avec les autres et agencés sur des côtés différents du creux et de l'élément support.

7. Ensemble formant support de capteur (12) selon l'une quelconque des revendications 2 à 6, comprenant en outre un rail de guidage (38) agencé dans un intervalle (C) défini entre l'élément support (16) et les faces latérales (32) du creux, ledit rail (38) étant formé de manière intégrale avec l'élément de cadre (14) et définissant un embout linéaire longitudinal en contact contre une face latérale opposée (28) de l'élément support.

8. Ensemble formant support de capteur (12) selon l'une quelconque des revendications 2 à 6, comprenant en outre un rail de guidage (38) agencé dans un intervalle (C) défini entre l'élément support (16) et les faces latérales (32) du creux, ledit rail (38) étant formé de manière intégrale avec l'élément support (16) et définissant un embout linéaire longitudinal en contact contre une face latérale opposée (28) du creux.

9. Ensemble formant support de capteur (12) selon l'une quelconque des revendications 7 ou 8, dans lequel ledit embout linéaire définit une arête vive (40) en contact permanent avec ladite face latérale opposée.

10. Ensemble formant support de capteur (12) selon la revendication 9, dans lequel ladite arête vive (40) grave une ligne axiale dans ladite face latérale opposée quand l'élément support (16) se déplace depuis la position normale (P1) jusqu'à ladite position écrasée (P2).

11. Ensemble formant support de capteur (12) selon l'une quelconque des revendications précédentes, comprenant en outre un élément flexible qui maintient l'élément support (16) dans la position normale (P1) aussi longtemps que ladite force longitudinale appliquée sur l'élément support est inférieure audit seuil prédéterminé (F0), ledit élément flexible étant rompu et déplacé sous l'influence du déplacement de l'élément support depuis ladite position normale vers ladite position écrasée.

12. Ensemble formant support de capteur (12) selon la revendication 11, dans lequel ledit élément flexible comprend un bras élastique (44) qui s'étend depuis l'élément de cadre (14) jusqu'à une tête distante en contact contre une face latérale (28) de l'élément support.

13. Ensemble formant support de capteur (12) selon la revendication 11, dans lequel ledit élément flexible comprend un bras élastique (44) qui s'étend depuis l'élément support (16) jusqu'à une tête distante en contact contre une face latérale opposée (32) du creux.

14. Ensemble formant support de capteur (12) selon l'une quelconque des revendications 12 ou 13, comprenant une pluralité de bras élastiques (44) agencés autour de l'élément support.

15. Ensemble formant support de capteur (12) selon l'une quelconque des revendications 11 à 14, comprenant en outre un élément de retenue qui retient l'élément support (16) dans ladite position normale (P1).

16. Ensemble formant support de capteur (12) selon la revendication 15, dans lequel ledit élément de retenue comprend une pince de blocage agencée à l'extrémité d'un bras de blocage (48) s'étendant depuis l'élément de cadre (14), la pince définissant une face de blocage (52) engagée contre une face de blocage complémentaire (54) de l'élément support.

17. Ensemble formant support de capteur (12) selon la revendication 15, dans lequel ledit élément de retenue comprend une pince de blocage agencée à l'extrémité d'un bras de blocage (48) formé de manière intégrale avec l'élément support (16), la pince définissant une face de blocage (52) engagée contre une face de blocage complémentaire (54) de l'élément de cadre.

18. Ensemble formant support de capteur (12) selon l'une quelconque des revendications 16 ou 17, comprenant une pluralité d'éléments de retenue.

19. Ensemble formant support de capteur (12) selon l'une quelconque des revendications 16 à 18 dans lequel, dans la position normale (P1), l'élément support (16) force axialement les bras élastiques (44) qui réagissent en appliquant à l'élément support une force antagoniste axiale opposée à la direction d'écrasement, l'élément support (16) étant maintenu dans ladite position normale (P1) par ladite pince de blocage.

20. Ensemble formant support de capteur (12) selon la revendication 19, dans lequel la force seuil d'écrasement (F0) est prédéterminée par lesdites forces antagonistes générées par les bras élastiques (44).

21. Ensemble formant support de capteur (12) selon la combinaison des revendications 20 et 14, dans lequel la somme des forces antagonistes individuelles appliquées par chacun des bras élastiques (44) est égale audit seuil prédéterminé (F0).

22. Ensemble formant support de capteur (12) selon la combinaison des revendications 21, 16 et 12, comprenant une pluralité de groupes de maintien agencés autour du creux (26), chaque groupe comprenant deux bras élastiques (44) appliquant des forces antagonistes et agencés sur les deux côtés d'un bras de blocage (46) qui retient l'élément support (16) dans la position normale (P1), lesdits trois bras (44, 46) étant alignés.
